Europäisches Patentamt

European Patent Office

Office européen des brevets

(19)

(11) Numéro de publication: **0 370 155**
**A1**

## (12) DEMANDE DE BREVET EUROPEEN

(21) Numéro de dépôt: **88470022.0**

(22) Date de dépôt: **30.11.88**

(51) Int. Cl.⁵: **G06F 1/00, A63F 9/22**

(30) Priorité: **23.11.88 FR 8815495**

(43) Date de publication de la demande:
**30.05.90 Bulletin 90/22**

(84) Etats contractants désignés:
**AT BE CH DE ES FR GB GR IT LI LU NL SE**

(71) Demandeur: **Widerski, Henri**
**1 rue de la Cristallerie**
**F-54000 Nancy(FR)**

(72) Inventeur: **Widerski, Henri**
**1 rue de la Cristallerie**
**F-54000 Nancy(FR)**

(74) Mandataire: **Poupon, Michel**
**3, rue Thiers B.P. 247**
**F-88007 Epinal Cédex(FR)**

(54) **Dispositif support d'un écran de jeux vidéo.**

(57) Dispositif support d'un écran de jeux vidéo, comprenant un cassion deux parties dont une (10) peut translater vers l'avant du jeu vidéo par l'intermédiaire de deux coulisses (16) canalisées par les guides de coulisses solidaires du meuble du jeu vidéo, et l'autre est mobile se mouvant par rotation dans la première partie, sans nécessité de dépose.

FIG. 1

EP 0 370 155 A1

## Dispositif support d'un écran de jeux vidéo

La présente invention concerne un dispositif support, permettant la maintenance rapide d'un jeu vidéo et de ses organes essentiels et la modification aisée du positionnement du grand axe de l'écran ainsi que l'utilisation d'écrans de grandes dimensions (de 60cm et plus) et d'un poids relativement important, sans dépose de l'écran ni modification dimensionnelle du meuble d'habillage du jeu vidéo.

La manipulation à risque des systèmes actuellement existants, implique l'intervention de plusieurs opérateurs, la dépose complète de l'écran avec les risques inhérents à cette intervention et le déplacement du meuble complet pour intervention par l'arrière du meuble de jeux vidéo.

Il en va de même de manière générale du transport et de la manutention de tout tube cathodique.

De manière plus spécifique pour les jeux vidéos, il n'est pas possible d'élargir à volonté les meubles, car un encombrement excessif en largeur n'est pas accepté par les professionnels chez qui ces appareils sont installés.

Par ailleurs, il peut être nécessaire lors d'un changement de jeu de changer le positionnement du grand axe de l'écran, qui passe de la position verticale à la position horizontale, ou inversement.

Dans les dispositifs actuels, cette opération est fastidieuse et surtout demande l'intervention d'un spécialiste, ce qui est onéreux.

On remédie à ces différents inconvénients en proposant, selon l'invention, un dispositif support d'un écran de jeux vidéo, caractérisé par un caisson en deux parties dont une est mobile et l'autre fixe translatant vers l'avant du jeu vidéo, par l'intermédiaire de deux coulisses (16) canalisées par les guides de coulisses solidaires du meuble du jeu vidéo, sans nécessité de dépose.

Le dispositif selon l'invention permet de remédier à ces inconvénients, manipulation et maintenance assurées par un seul intervenant, sans dépose de l'écran et sans déplacement de l'ensemble meuble jeux vidéo, toutes les interventions sont possibles par la face avant pour réparation, modification ou remplacement des cartes jeux (circuit imprimé), dispositif couplé avec un volet disposé sous l'écran et basculant sur l'avant de l'appareil (système connu par lui-même). L'accessibilité frontale complète de l'ensemble permet une intervention sur tous les organes électriques et électroniques de l'appareil, le remplacement, modification, réparation des éléments défectueux. Ce dispositif permet l'intervention rapide et des gains susbtentiels de productivité dans la maintenance des jeux vidéo.

La présente invention résoud les différents inconvénients des systèmes actuels.

Le dispositif est constitué d'un caisson en deux parties dont une fixe et l'autre est mobile, l'ensemble se mouvant par translation sur des guides. La partie mobile du caisson est un cadre avec pattes d'écartement assurant la liaison et la fixation avec le plateau circulaire évidé en partie centrale pour permettre le passage du canon de l'écran du jeu vidéo, la partie fixe sert de support du système et de guide en permettant à la partie mobile son mouvement de rotation et ce grâce aux lumières et feuillures sur les éléments de la partie fixe.

Lors d'une intervention, le technicien de maintenance fait basculer le volet sous l'écran, tire l'ensemble du caisson vers l'avant qui se meut par translation sur des guides solidaires du meuble, il fait pivoter d'un quart de tour la partie mobile du caisson sur laquelle est fixé l'écran, ce qui positionne l'écran soit horizontalement ou verticalement selon le besoin et en fonction de la spécificité du jeu vidéo sur la carte (circuit imprimé). L'avantage de la translation permet de garder des dimensions de meubles réduites (meubles existants), tout en permettant l'utilisation d'écrans de grandes dimensions de 60 cm et plus, il permet en outre une accessibilité aisée à tous les organes essentiels, par la façade avant du meuble vidéo sans à avoir à déplacer celui-ci.

Pour ce dispositif support, il est envisagé la construction de celui-ci soit en métal, soit en bois, soit en matériaux composites ou éventuellement une solution mixte, volontairement les dessins annexés figurent une solution mixte. On comprendra mieux l'invention à l'aide de la description faite ci-après en référence aux dessins annexés dans lesquels :

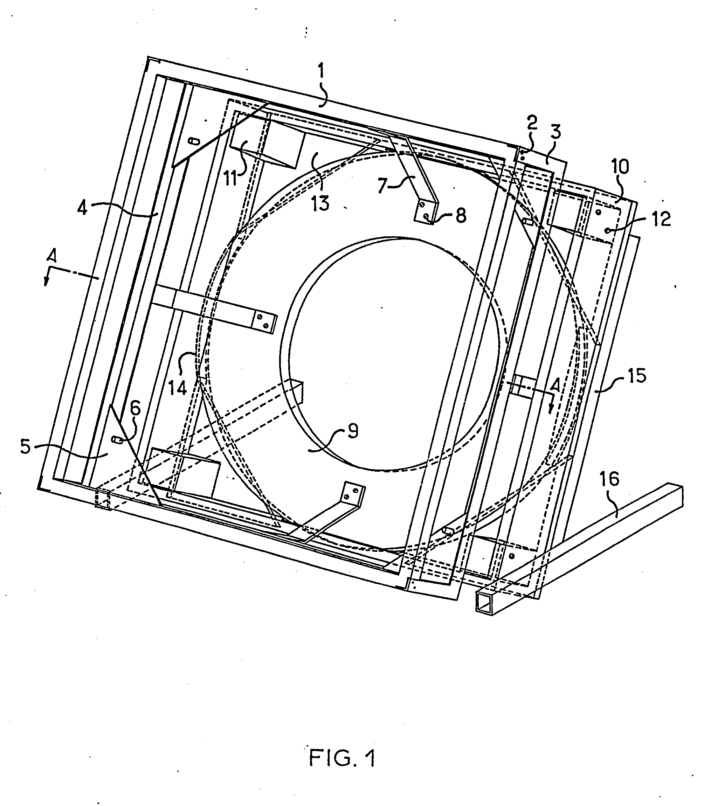

- la figure 1 représente en perspective le dispositif selon l'invention ;

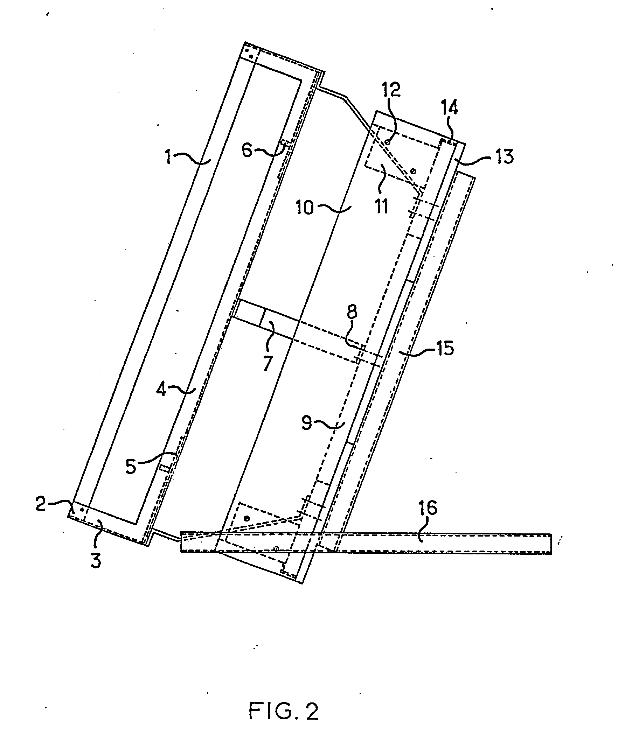

- la figure 2 représente sa vue de côté ;

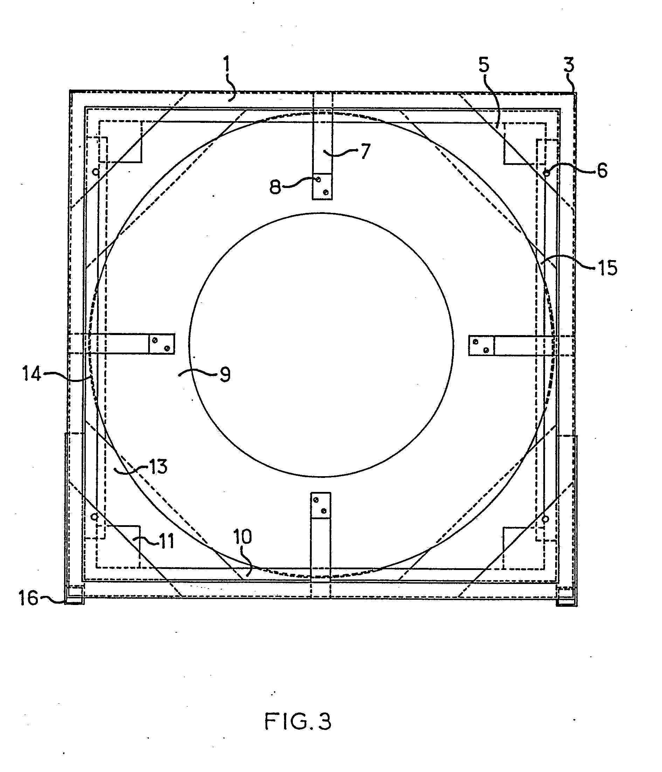

- la figure 3 représente sa face avant ;

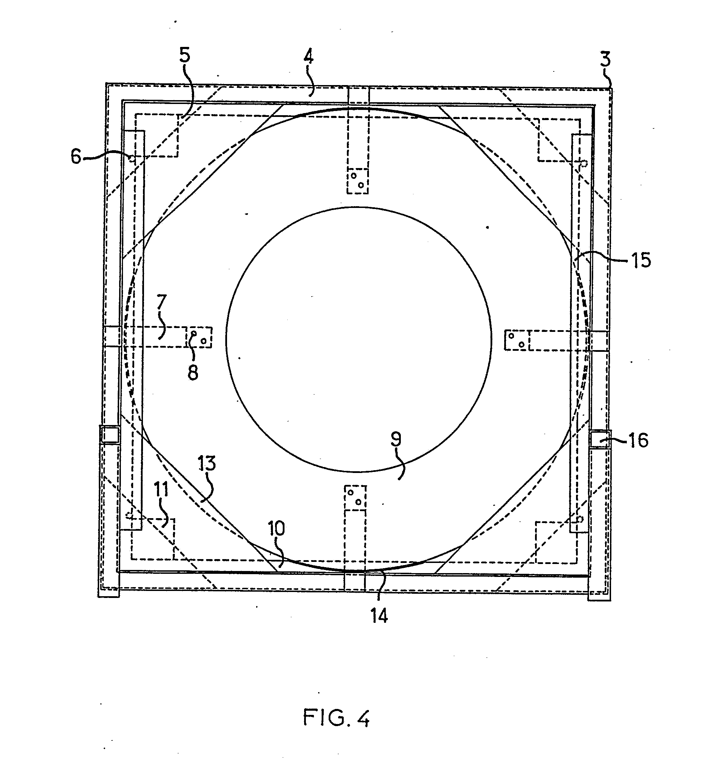

- la figure 4 représente sa face arrière ;

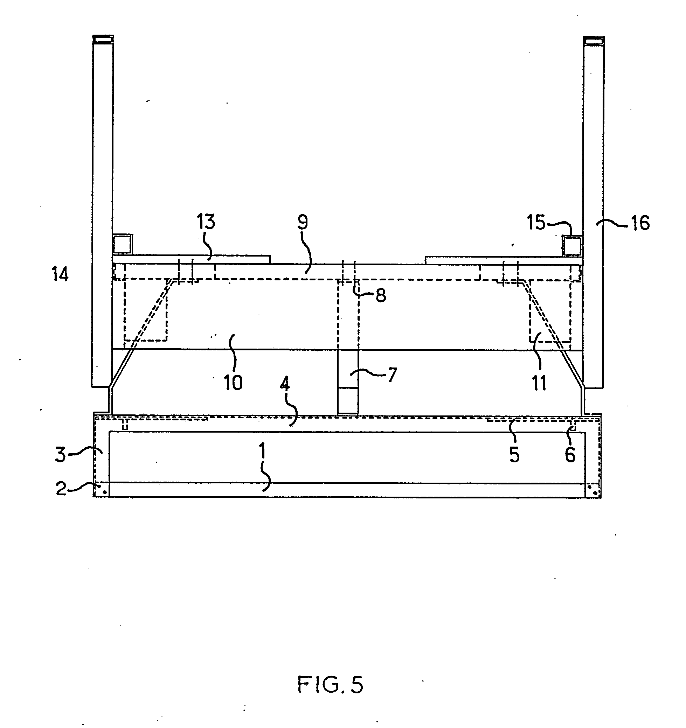

- la figure 5 représente sa face de dessus ;

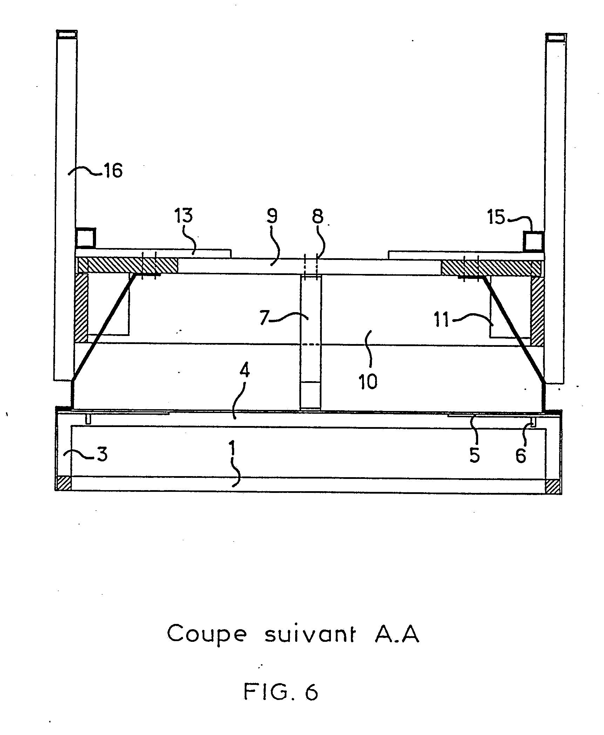

- la figure 6 représente sa coupe, parallèlement à sa vue de dessus et en son axe.

Le dispositif support représenté, comprend un caisson en deux parties dont une est mobile et l'autre fixe; il est constitué par :
- une partie mobile comportant un cadre supérieur (1) fixé par vis (2) sur des entretoises d'angles (3) soudées sur un cadre inférieur (4) équipé à chaque angle d'une platine (5); les platines comportent une tige filetée (6), l'ensemble muni de pattes d'écartement (7) fixées par vis (8) sur un plateau circulaire (9) se mouvant par rotation dans la partie fixe ;

- une partie fixe (10) confortée à chaque angle par un renfort (11) fixé sur la partie fixe par vis (12), sur chaque côté elle comporte une feuillure courbe (14) et en face arrière des pièces d'angles (13) permettant l'insertion du plateau circulaire (9) et assurer ainsi la rotation de la partie mobile ;

- en face arrière du dispositif et de part et d'autre montant vertical (15) assemblé sur coulisse (16) permettant la translation de l'ensemble sur les guides de coulisses solidaires du meuble du jeu vidéo.

Le dispositif selon l'invention est particulièrement destiné à faciliter la maintenance de l'ensemble du jeu vidéo et le positionnement de l'écran dans la position requise, position pouvant être horizontale ou verticale en fonction de la spécificité du jeu vidéo utilisé.

Il permet en outre un échange standard de l'écran sans risque de casser celui-ci du fait du caisson. Le démontage, le transport et le stockage sont facilités.

## Revendications

**1.** Dispositif support d'un écran de jeux vidéo, caractérisé par un caisson en deux parties dont une est mobile et l'autre fixe translatant vers l'avant du jeu vidéo, par l'intermédiaire de deux coulisses (16) canalisées par les guides de coulisses solidaires du meuble du jeu vidéo, sans nécessité de dépose.

**2.** Dispositif selon la revendication 1, caractérisé en ce que la partie mobile du caisson constituée par un cadre supérieur (1) solidaire d'un cadre inférieur (4) supportant l'écran par l'intermédiaire de platines (5) et tiges filetées (6), l'ensemble solidaire d'un plateau circulaire (9) se mouvant par rotation dans la partie fixe (10) permet le positionnement soit horizontalement ou verticalement en fonction de la spécificité du jeu vidéo, sans nécessiter la dépose de l'écran.

FIG. 1

FIG. 2

FIG.3

FIG. 4

FIG.5

Coupe suivant A.A

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | WO-A-8 702 858  (PROCACCI) <br> * En entier * <br> --- | 1,2 | G 06 F    1/00 <br> A 63 F    9/22 |
| A | FR-A-2 554 269  (ENTERPRISES SAUNIER DUVAL) <br> * Résumé; figure 2 * <br> --- | 1 | |
| A | FR-A-2 542 543  (RENE PIERRE) <br> * Résumé; figure 1 * <br> ----- | 2 | |

DOMAINES TECHNIQUES
RECHERCHES (Int. Cl.4)

G 06 F    1
F 16 M   11
H 04 M    5
A 63 F    9

Le présent rapport a été établi pour toutes les revendications

| Lieu de la recherche | Date d'achèvement de la recherche | Examinateur |
|---|---|---|
| LA HAYE | 17-07-1989 | CIARELLI N. |

EPO FORM 1503 03.82 (P0402)